**Europäisches Patentamt**

**European Patent Office**

**Office européen des brevets**

(19)

(11) Veröffentlichungsnummer : **0 168 715 B1**

(12) **EUROPÄISCHE PATENTSCHRIFT**

(45) Veröffentlichungstag der Patentschrift :
28.09.88

(51) Int. Cl.⁴ : **H 02 M 1/08**

(21) Anmeldenummer : **85108229.7**

(22) Anmeldetag : **03.07.85**

(54) Schaltungsanordnung zur Überwachung eines Thyristors.

(30) Priorität : **17.07.84 DE 3426767**

(43) Veröffentlichungstag der Anmeldung :
**22.01.86 Patentblatt 86/04**

(45) Bekanntmachung des Hinweises auf die Patenterteilung : **28.09.88 Patentblatt 88/39**

(84) Benannte Vertragsstaaten :
**AT CH DE FR GB IT LI SE**

(56) Entgegenhaltungen :
**EP-A- 0 103 182**
**DE-A- 2 363 617**

(73) Patentinhaber : **Siemens Aktiengesellschaft Berlin und München**
**Wittelsbacherplatz 2**
**D-8000 München 2 (DE)**

(72) Erfinder : **Thiele, Gerd, Dipl.-Ing.**
**Lessingstrasse 3b**
**D-8520 Erlangen (DE)**

## Beschreibung

Die Erfindung betrifft eine Schaltungsanordnung zur Überwachung eines Thyristors mit einer Signalgebervorrichtung, die eingangsseitig parallel zu dem Thyristor liegt und an deren Ausgang eine Leuchtdiode zur Aussendung von Lichtsignalen an eine Auswerteeinrichtung angeschlossen ist, wobei die Signalgebervorrichtung eingangsseitig eine Gleichrichterschaltung enthält.

Aus der « etz », Heft 25, Band 102, Dezember 1981, auf Seite 1341 f in Bild 7 ist eine Schaltungsanordnung bekannt, die Bestandteil einer Thyristorabschnittselektronik ist, die einem Thyristor zugeordnet ist. Die Thyristorabschnittselektronik weist zu ihrer Stromversorgung eine eigene Energieversorgungsschaltung auf und wird über diese aus einer Hilfsenergieauskoppelschaltung gespeist, die in Reihe mit einem Bedämpfungswiderstand und einem Bedämpfungskondensator parallel zu dem Thyristor liegt. Zur Überwachung des Thyristors enthält die Thyristorabschnittselektronik eine Signalgebervorrichtung mit einem parallel zu dem Thyristor liegenden ohmschen Spannungsteiler, an dessen Teilerabgriff eine Signalverarbeitungsschaltung angeschlossen ist; der Signalverarbeitungsschaltung ist ein Lichtsignalsender mit einer Leuchtdiode nachgeordnet, die bei Ansteuerung Lichtsignale aussendet. Die Lichtsignale werden über einen Lichtleiter an eine Auswerteeinrichtung übertragen.

Aus der EP-A-0 103 182 ist eine Einrichtung zur Überwachung der Stromrichterventile eines Wechselstromstellers, bei dem wenigstens zwei Schalteinheiten mit je einer Antiparallelschaltung von zwei Stromrichterventilen in Serie geschaltet sind, bekannt. Jeder Schalteinheit ist ein Signalfühler zugeordnet, der ein von der an der Schalteinheit anliegenden Spannung abhängiges Signal bildet, das mittels einer Übertragungseinrichtung einer Auswerteschaltung zugeführt ist. Dabei ist für die Signalfühler von zwei aufeinanderfolgenden Schalteinheiten ein gemeinsamer Signalgeber vorgesehen. Dieser Signalgeber gibt in aufeinanderfolgenden Halbwellen jeder Periode der Speisespannung für die eine oder andere der beiden Schalteinrichtungen ein Signal ab. Nachteilig dieser Einrichtung ist, daß die lichtemittierende Diode LED1 zur Erzielung einer großen Lichtleistung nicht impulsartig mit sehr großen Stromimpulsen betrieben werden kann, damit als Verbindung gegen Erdpotential bei großen Ventiltürmen billige Lichtleiter, die jedoch dämpfungsbehaftet sind, verwendet werden können.

Der Erfindung liegt die Aufgabe zugrunde, eine Schaltungsanordnung zur Überwachung eines Thyristors anzugeben, die wegen Verzichts auf eine eigene Energieversorgungsschaltung besonders einfach und damit funktionssicher aufgebaut ist und eine Aussendung von Lichtsignalen mit besonders hoher Lichtleistung ermöglicht.

Die Aufgabe wird erfindungsgemäß dadurch gelöst, daß der Gleichrichterschaltung ein Integrierglied nachgeordnet ist, das aus einem Widerstand und einem mit diesem in Reihe liegenden Speicherkondensator besteht, dessen Anschlüsse den Ausgang des Integriergliedes bilden, daß zwischen dem Ausgang des Integriergliedes und dem Ausgang der Signalgebervorrichtung ein Schwellenspannungsschalter liegt, der in einem stromleitenden Zustand übergeht, sobald die an ihm abfallende Spannung einen vorgegebenen Schwellenwert überschreitet, und daß der Speicherkondensator und der Widerstand derart bemessen sind, daß die Ladezeit zur Aufladung des Kondensators auf eine dem vorgegebenen Schwellenwert entsprechende Spannung einem Drittel bis der Hälfte der Periodendauer der Wechselspannung entspricht.

Die Überwachung des Thyristors erfolgt durch Aussendung eines Lichtsignales an die Auswerteeinrichtung, wenn der Thyristor in den nichtleitenden Betriebszustand (Sperren, Blockieren) übergeht. Dabei besteht der wesentliche Vorteil der erfindungsgemäßen Schaltungsanordnung darin, daß im nichtleitenden Betriebszustand des Thyristors die Energie der an dem Thyristor entstehenden Spannung genutzt wird, um die Leuchtdiode zur Aussendung eines Lichtsignales anzusteuern; die Energie der Spannung am Thyristor wird dabei über die Gleichrichteranordnung, das Integrierglied und den Schwellenspannungsschalter der Leuchtdiode zugeführt. Eine eigene Energieversorgungsschaltung zur Stromversorgung der erfindungsgemäßen Schaltungsanordnung ist daher nicht erforderlich. Durch die direkte Ausnutzung der Energie der Spannung an dem Thyristor lassen sich in der Leuchtdiode Lichtsignale mit besonders hoher Lichtleistung erzeugen, so daß auch kostengünstigere, mit relativ hoher Dämpfung behaftete Lichtleiter Verwendung finden können, um die Lichtsignale dennoch sicher von der Leuchtdiode zu der Auswerteeinrichtung zu übertragen.

Das Integrierglied bewirkt zusammen mit dem Schwellenspannungsschalter in vorteilhafter Weise, daß eine Ansteuerung der Leuchtdiode bei zufällig an dem Thyristor auftretenden Spannungssprüngen nicht erfolgt, weil erst dann eine Ansteuerung der Leuchtdiode erfolgt, wenn die Spannung am Ausgang des Integriergliedes den vorgegebenen Schwellenwert des Schwellenspannungsschalters überschreitet.

Eine besonders hohe Lichtleistung der von der Leuchtdiode ausgesandten Lichtsignale wird dadurch erzielt, daß das Integrierglied aus einem Widerstand und einem mit diesem in Reihe liegenden Speicherkondensator besteht, dessen Anschlüsse den Ausgang des Integriergliedes bilden. Überschreitet nämlich die Spannung an dem Speicherkondensator den vorgegebenen Schwellenwert des Schwellenspannungsschalters, so steht die gesamte in dem Speicherkondensator gespeicherte Energie zur Verfügung, um einen hohen Entladestrom durch die Leuchtdiode zur Erzeugung eines Lichtsignales mit hoher Lichtleistung zu bewirken.

Der Thyristor ist im allgemeinen in einer mit Wechselspannung betriebenen Anlage angeordnet ; dabei ist es von Vorteil, wenn der Speicherkondensator und der Widerstand des Integriergliedes derart bemessen sind, daß die Ladezeit zur Aufladung des Speicherkondensators auf eine dem vorgegebenen Schwellenwert entsprechende Spannung einem Drittel bis der Hälfte der Periodendauer der Wechselspannung entspricht. Auf diese Weise erhält man eine bei nichtleitendem Thyristor gegenüber Spannungssprüngen an dem Thyristor unempfindliche Signalgebervorrichtung, wodurch eine fehlerhafte Ansteuerung der Leuchtdiode verhindert wird.

Bei einer vorteilhaften Ausbildung der erfindungsgemäßen Schaltungsanordnung ist der Schwellenspannungsschalter ein Kippspannungsschalter, der erst dann von einem stromleitenden in einen stromsperrenden Zustand übergeht, wenn der durch ihn fließende Strom einen Mindestwert unterschreitet.

Besonders vorteilhaft ist es, wenn der Widerstand des Integriergliedes derart bemessen ist, daß bei nichtleitendem Thyristor der Strom durch den Schwellenspannungsschalter größer als der vorgegebene Mindestwert ist. Dadurch wird nach der Aussendung eines Lichtsignales eine Aussendung weiterer Lichtsignale verhindert, solange der Thyristor noch nichtleitend ist. Erst wenn der Thyristor wieder in einen stromleitenden Zustand übergeht, sinkt der Strom durch den Schwellenspannungsschalter unter den vorgegebenen Mindestwert, so daß der Schwellenspannungsschalter wieder in einen stromsperrenden Zustand kippt.

Zur Erläuterung der Erfindung ist in

Fig. 1 ein bevorzugtes Ausführungsbeispiel der erfindungsgemäßen Schaltungsanordnung dargestellt ;

Fig. 2 zeigt ein Diagramm mit dem jeweiligen Verlauf der in Fig. 1 bezeichneten Spannungen und des in Fig. 1 bezeichneten Stromes.

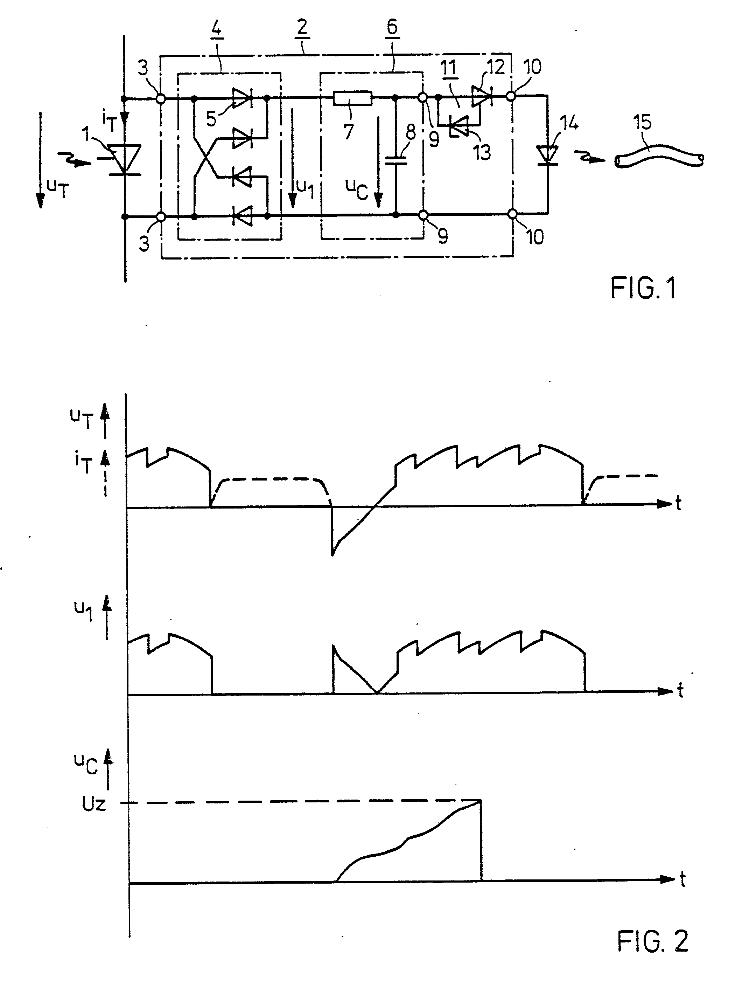

Fig. 1 zeigt einen zu überwachenden Thyristor, der beispielsweise zusammen mit weiteren Thyristoren in einem Ventilzweig einer Stromrichteranordnung angeordnet sein kann. Der Thyristor 1 kann ein elektrisch zündbarer oder entsprechend der Darstellung in Fig. 1 ein lichtzündbarer Thyristor sein. Parallel zu dem Thyristor 1 liegt eine Signalgebervorrichtung 2, die mit ihren Eingangsanschlüssen 3 an dem Anodenanschluß bzw. dem Kathodenanschluß des Thyristors 1 angeschlossen ist. Die Signalgebervorrichtung 2 enthält eine Gleichrichteranordnung 4, die aus vier zu einem Vollweggleichrichter angeordneten Dioden 5 besteht. Die Gleichrichteranordnung 4 ist eingangsseitig an den Eingangs-Anschlüssen 3 der Signalgebervorrichtung 2 angeschlossen und ausgangsseitig mit einem nachgeordneten Integrierglied 6 verbunden. Das Integrierglied 6 besteht aus einem Widerstand 7 und einem mit diesem in Reihe liegenden Speicherkondensator 8, dessen Anschlüsse den Ausgang 9 des Integriergliedes 6 bilden. Zwischen dem Ausgang 9 des Integriergliedes 6 und dem Ausgang 10 der Signalgebervorrichtung 2 ist in einem Längszweig ein Schwellenspannungsschalter 11 angeordnet. Dieser bildet bei dem dargestellten Ausführungsbeispiel der erfindungsgemäßen Schaltungsanordnung einen Kippspannungsschalter und besteht aus einem Hilfsthyristor 12, zwischen dessen Anodenanschluß und Gateanschluß eine Zenerdiode 13 liegt. Die Schwellenspannung des Schwellenspannungsschalters 11 entspricht der Zenerspannung seiner Zenerdiode 13. In Abwandlung zu dem dargestellten Ausführungsbeispiel kann der Schwellenspannungsschalter auch aus einer Kippspannungsdiode (Break-Over-Diode), einem Unijunctionthyristor oder lediglich aus einer einfachen Zenerdiode bestehen. An dem Ausgang 10 der Signalgebervorrichtung 2 ist eine Leuchtdiode 14 angeschlossen, die beispielsweise eine Infrarotleuchtdiode sein kann. Die Leuchtdiode 14 ist an einem Leitungsende eines hier nur abschnittsweise dargestellten Lichtleiters 15 optisch angekoppelt, wobei das andere Leitungsende des Lichtleiters 15 an einer nicht dargestellten Auswerteeinrichtung angeschlossen ist.

Zur Erläuterung der Funktionsweise des in Fig. 1 dargestellten Ausführungsbeispieles der erfindungsgemäßen Schaltungsanordnung sind in Fig. 2 der Verlauf der Spannung $u_T$ an dem Thyristor 1, der Strom $i_T$ durch den Thyristor 1, die Spannung $u_1$ am Ausgang der Gleichrichteranordnung 4 und die Spannung $u_C$ am Ausgang 9 des Integriergliedes 6 jeweils in Abhängigkeit von der Zeit t dargestellt. Die gezeigten Verläufe der Spannungen und des Stromes ergeben sich für den Fall, daß der in Fig. 1 dargestellte Thyristor ein Ventilelement einer hier nicht dargestellten, im Wechselrichterbetrieb arbeitenden Stromrichteranlage bildet. Solange sich der Thyristor 1 in einem stromleitenden Zustand befindet, fließt der Strom $i_T$ durch den Thyristor 1 und der Wert der an ihm anliegenden Spannung $u_T$ ist nahezu Null. Dementsprechend weisen auch die Spannungen $u_1$ am Ausgang der Gleichrichteranordnung 4 und $u_C$ am Ausgang 9 des Integriergliedes 6 jeweils den Wert Null auf, so daß kein Strom durch die Leuchtdiode 14 fließt. Sobald der Thyristor 1 in einen sperrenden Zustang übergeht, nimmt die Spannung $u_T$ an dem Thyristor 1 einen von Null verschiedenen Spannungsverlauf an, bis bei positiver Spannung $u_T$ in Durchlaßrichtung des Thyristors 1 dieser gezündet wird und wieder in einen stromleitenden Zustand übergeht. Während des nichtleitenden Zustandes des Thyristors 1 entsteht am Ausgang der Gleichrichteranordnung 4 durch Gleichrichtung der Spannung $u_T$ die Spannung $u_1$. Die Spannung $u_1$ lädt den Kondensator 8 des Integriergliedes 6 über dessen Widerstand auf. Der Speicherkondensator 8 ist derart dimensioniert, daß seine Ladezeit, bis die Spannung $u_C$ an dem Speicherkondensator 8 den Wert der Zenerspannung Uz der Zenerdiode 13 erreicht, etwa einem Drittel bis der Hälfte der Periodendauer der Wechselspannung entspricht, mit der die Stromrichteranlage betrieben wird, in der der Thyristor 1 angeordnet ist. Sobald die

Spannung $u_C$ an dem Speicherkondensator 8 den Wert der Zenerspannung Uz der Zenerdiode 13 erreicht, bewirkt dieser eine Zündung des Hilfsthyristors 12. Der Speicherkondensator 8 entlädt sich nun über den Hilfsthyristor 12 und die Leuchtdiode 14, wobei ein sehr hoher, impulsförmiger Entladestrom fließt. In der Leuchtdiode 14 wird der hohe Entladestrom in ein Lichtsignal mit entsprechend hoher Lichtleistung umgewandelt. Der Widerstand 7 des Integriergliedes 6 ist derart bemessen, daß nach der Entladung des Speicherkondensators 8 während des nichtleitenden Zustandes des Thyristors 1 ein Reststrom durch den Hilfsthyristor 12 fließt, der größer als der dem Haltestrom des Hilfsthyristors 12 entsprechende Mindestwert des Schwellenspannungsschalters 11 ist. Dadurch wird verhindert, daß der Hilfsthyristor 12 während des andauernden nichtleitenden Zustandes des Thyristors 1 sperrt und der Kondensator 8 erneut aufgeladen und über die Leuchtdiode 14 wieder entladen wird.

**Patentansprüche**

1. Schaltungsanordnung zur Überwachung eines Thyristors (1) mit einer Signalgebervorrichtung (2), die eingangsseitig parallel zu dem Thyristor (1) liegt und an deren Ausgang (10) eine Leuchtdiode (14) zur Aussendung von Lichtsignalen an eine Auswerteeinrichtung angeschlossen ist, wobei die Signalgebervorrichtung (2) eingangsseitig eine Gleichrichterschaltung (4) enthält, dadurch gekennzeichnet, daß der Gleichrichterschaltung (4) ein Integrierglied (6) nachgeordnet ist, das aus einem Widerstand (7) und einem mit diesem in Reihe liegenden Speicherkondensator (8) besteht, dessen Anschlüsse den Ausgang (9) des Integriergliedes (6) bilden, daß zwischen dem Ausgang (9) des Integriergliedes (6) und dem Ausgang (10) der Signalgebervorrichtung (2) ein Schwellenwertspannungsschalter (11) liegt, der in einen stromleitenden Zustand übergeht, sobald die an ihm abfallende Spannung einen vorgegebenen Schwellenwert überschreitet, und daß der Speicherkondensator (8) und der Widerstand (7) derartig bemessen sind, daß die Ladezeit zur Aufladung des Kondensators (8) auf eine dem vorgegebenen Schwellenwert entsprechende Spannung einem Drittel bis der Hälfte der Periodendauer der Wechselspannung entspricht.

2. Schaltungsanordnung nach Anspruch 1, dadurch gekennzeichnet, daß der Widerstand (7) des Integriergliedes (6) derart bemessen ist, daß bei nichtleitendem Thyristor (1) der Strom durch den Schwellenspannungsschalter (11) größer als der vorgegebene Mindestwert ist.

**Claims**

1. Circuit arrangement for monitoring a thyristor (1) with a signal transmitting device (2), the input aide of which is arranged in parallel with the thyristor (1) and at the output (10) of which there is connected a light-emitting diode (14) for transmitting light signals to an evaluating device, the signal transmitting device (2) containing, on the input side, a rectifier circuit (4), characterised in that arranged after the rectifier circuit (4) there is an integrator (6) which consists of a resistor (7) and a storage capacitor (8) which is connected in series with the latter and the connections of which form the output (9) of the integrator (6), in that lying between the output (9) of the integrator (6) and the output (10) of the signal transmitting device (2) there is a threshold value voltage switch (11) which enters a current-conducting state as soon as the voltage drop across it crosses a preset threshold value, and in that the storage capacitor (8) and the resistor (7) are dimensioned such that the charging time for charging the capacitor (8) to a voltage corresponding to the preset threshold value corresponds to between one third and one half of the period of the alternating voltage.

2. Circuit arrangement according to claim 1, characterised in that the resistor (7) of the integrator (6) is dimensioned such that with the thyristor (1) not conducting the current through the threshold voltage switch (11) is greater than the preset minimum value.

**Revendications**

1. Circuit de surveillance d'un thyristor (1), comprenant un dispositif générateur de signaux (2) qui est connecté en parallèle avec le thyristor (1) par son entrée et à la sortie (10) duquel est reliée une diode électroluminescente (14) destinée à émettre des signaux lumineux vers un dispositif d'exploitation, l'entrée du dispositif générateur de signaux (2) contenant un circuit redresseur (4), caractérisé en ce que le circuit redresseur (4) est suivi d'un élément intégrateur (6) qui est constitué d'une résistance (7) et d'un condensateur d'accumulation (8) monté en série avec elle et dont les bornes forment la sortie (9) de l'élément intégrateur (6), qu'un interrupteur à tension de seuil (11) est disposé entre la sortie (9) de l'élément intégrateur (6) et la sortie (10) du dispositif générateur de signaux (2), interrupteur qui passe à l'état conducteur dès que la chute de tension produite à ces bornes dépasse un seuil préfixé, et que le condensateur d'accumulation (8) et la résistance (7) sont dimensionnés de manière que le temps de charge pour charger le condensateur (8) à une tension correspondant au seuil préfixé corresponde à un tiers jusqu'à la moitié de la durée de période de la tension alternative.

2. Circuit selon la revendication 1, caractérisé en ce que la résistance (7) de l'élément intégrateur (6) est dimensionnée de manière que lorsque le thyristor (1) n'est pas conducteur, le courant traversant l'interrupteur à tension de seuil (11) est supérieur à une valeur minimale préfixée.

0 168 715

FIG. 1

FIG. 2

1